# EUROPÄISCHE PATENTSCHRIFT

(11) **EP 3 048 291 B1**
(45) Veröffentlichungstag und Bekanntmachung des Hinweises auf die Patenterteilung: **28.03.2018**
(21) Anmeldenummer: 16000255.6
(22) Anmeldetag: 29.10.2008
(51) Int. Cl.: F02M 26/00, F02M 26/24, F02M 26/27, F02B 29/04, F01N 3/023, F01N 3/22, F01N 3/32, F02B 37/16, F01N 3/30, F02B 37/013, F02M 26/15, F02B 33/32, F02B 33/44, F01N 3/20

(54) **BRENNKRAFTMASCHINE MIT AGR-KÜHLER**
INTERNAL COMBUSTION ENGINE WITH EGR COOLER
MOTEUR A COMBUSTION INTERNE DOTE D'UN REFROIDISSEUR DES GAZ EGR

(30) Priorität: 12.11.2007 DE 102007054227
(43) Veröffentlichungstag der Anmeldung: 27.07.2016
(62) Teilanmeldung aus: 08018856.8
(73) Patentinhaber: MAN Truck & Bus AG, 80995 München (DE)
(72) Erfinder: Möller, Heribert, 91623 Sachsen (DE); Raab, Gottfried, 4320 Perg (AT)
(74) Vertreter: Liebl, Thomas

(56) Entgegenhaltungen:
- EP-A1- 1 491 735
- EP-A1- 1 754 879
- JP-A- 2001 342 911
- US-B1- 6 324 846

## Beschreibung

### Technisches Gebiet:

Die Erfindung betrifft ein Verfahren zum Betrieb einer Brennkraftmaschine sowie eine Brennkraftmaschine mit einem Verbrennungsraum und einem Abgassystem, in das den Verbrennungsraum verlassenendes Abgas einleitbar ist. Das Abgassystem verfügt über eine Abgasrückführung, mittels der das Abgas zumindest teilweise in eine Verbrennungsluftzufuhr zur Versorgung des Verbrennungsraums mit Ansaugluft rückführbar ist, wobei in der Abgasrückführung eine Wärmeübertrageeinheit vorgesehen ist, mit der dem Abgasenergie Wärmenergie entziehbar ist.

### Stand der Technik

Allgemein sind Brennkraftmaschinen bekannt, deren Abgassysteme über Abgasrückführungen verfügen, über die Abgas, das den Verbrennungsraum verlassen hat, erneut der Ansaugluft wieder zugeführt wird. Insbesondere bei Kraftfahrzeugen sind derartige Abgassysteme mit Abgasrückführung bekannt. Mit Hilfe der Abgasrückführung wird das aus der Brennkraftmaschine geleitete Abgas über entsprechende Rohrleitungen zumindest teilweise der Verbrennungsluft zugeführt, so dass eine Enthalpieerhöhung der Verbrennungsluft erreicht wird.

In der Kraftfahrzeugtechnik sind vor allem Abgasrückführsysteme für aufgeladene Brennkraftmaschinen bekannt, bei denen aus Verschleiß- und Verschmutzungsgründen das Abgas zwischen dem Motor und der Turbine entnommen und durch einen separaten Abgasrückführwärmetauscher geleitet wird. Der abgekühlte Abgasstrom wird strömungstechnisch hinter einem Ladeluftkühler zur Kühlung der Ansaugluft der für die Verbrennung vorgesehenen Verbrennungsluft wieder zugeführt.

In diesem Zusammenhang ist etwa aus der EP 1 843 033 A2 die Abgasanlage einer Brennkraftmaschine bekannt, die über eine entsprechende Abgasrückführung verfügt. In der Abgasrückführung ist eine Wärmeübertragereinheit, so genannter AGR-Kühler, vorgesehen, mittels dem dem Abgas Wärme entzogen und einem Abgasnachbehandlungssystem zugeleitet wird. Hierbei ist die Wärmeübertrageeinheit abgasseitig derart ausgeführt, dass sich die Abgasdruckpulsationen, die das Abgas nach Verlassen des wenigstens einen Brennraumes der Brennkraftmaschine aufweist, durch die Wärmeübertrageeinheit fortsetzen, so dass die Eindüsung des rückgeführten Abgases mit Hilfe eines Flatterventils in die Verbrennungsluft realisiert wird.

Um die ständig steigenden Anforderungen an die Abgaswerte von Brennkraftmaschinen, insbesondere der Kraftfahrzeugverbrennungsmotoren, zu erfüllen, liegt der Erfindung ausgehend von dem bekannten Stand der Technik die Aufgabe zugrunde, die Ausnutzung der im Abgas enthaltenen Wärme zu verbessern. Insbesondere soll hierbei das im Fahrzeug befindliche, herkömmliche Kühlsystem (Wasserkühlung) nicht mit zusätzlichen Kühllasten belastet werden. Des Weiteren soll mit der Erfindung sichergestellt werden, dass eine Optimierung der Anlagenkonfiguration, vor allem in Hinblick auf das Vorsehen eines Abgasnachbehandlungssystems mit thermischer Regeneration, optimiert wird. Die hierfür vorzusehenden Komponenten sollten sich darüber hinaus verhältnismäßig einfach an eine herkömmliche Brennkraftmaschine koppeln, bzw. in das entsprechende Motorenkonzept integrieren lassen.

Die der Erfindung zugrunde liegende Aufgabe wird mit einer Brennkraftmaschine gemäß Anspruch 1 sowie einem Verfahren nach Anspruch 18 gelöst. Vorteilhafte Ausführungsformen der Erfindung sind Gegenstand der abhängigen Ansprüche und werden in der nachfolgenden Beschreibung unter Bezugnahme auf die Figuren näher erläutert. Die US 6.324.846 B1 beschriebt eine weitere bekannte Brennkraftmaschine mit einem Verbrennungsraum und einem Abgassystem, in das den Verbrennungsraum verlassendes Abgas einleitbar ist und das über eine Abgasrückführung verfügt, mittels der das Abgas (10) zumindest teilweise in eine Verbrennungsluftzufuhr zur Versorgung des Verbrennungsraums mit Verbrennungsluft rückführbar ist, wobei in der Abgasrückführung eine Wärmeübertragereinheit vorgesehen ist, mit der dem Abgas Wärmeenergie entziehbar ist, wobei eine Verdichtereinheit vorgesehen ist, mit der der Umgebung entnommene Ansaugluft verdichtet und der verdichtete Ansaugluftstrom unter Umgehung des Verbrennungsraums zunächst durch die in der Abgasrückführung vorgesehene Wärmeübertragereinheit leitbar ist. Gemäss diesem Stand der Technik ist somit innerhalb der Abgasrückführung eine Wärmeübertragereinheit vorgesehen, in der die dem Abgas entzogene Wärme auf einen Luftstrom übertragbar ist. Der Luftstrom wird, vorzugsweise als Teilluftstrom, der Ansaugluft entnommen und mittels einer üblicherweise als Lüfterrad ausgeführten Verdichtereinheit durch die Wärmeübertragereinheit und anschließend in einen außerhalb der Abgasrückführung befindlichen Bereich des Abgassystems geleitet ohne direkt in den Abgasstrang eingeleitet zu werden. Alternativ ist es denkbar, die für den in der Abgasrückführung vorgesehenen Luft-/Abgaswärmetauscher benötigte Ansaugluft unmittelbar der Umgebung zu entnehmen und getrennt von der für die Verbrennung benötigte Verbrennungsluft zu führen.

Mit dieser technischen Lösung wird zunächst sichergestellt, dass mit Hilfe eines luftgekühlten Wärmeübertragers in der Abgasrückführung Wärme abgeführt werden kann, ohne das Hauptkühlsystem eines Fahrzeugs zu belasten. Darüber hinaus wird der verdichtete und durch die Wärmeübertragereinheit in der Abgasrückführung erwärmte Ansaugluftstrom genutzt, um das im Abgassystem außerhalb der Abgasrückführung geführte Abgas, vorzugsweise bevor es in ein Abgasnachbehandlungssystem strömt, zu erwärmen oder den entsprechenden Bereich des Abgassystems zumindest derart zu isolieren, dass eine zu starke Auskühlung des Abgases vor Erreichen des Abgasnachbehandlungssystems verhindert wird. Wesentlich hierbei ist, dass der verdichtete und erwärme Ansaugluftstrom nicht durch das Abgasnachbehandlungssystem geleitet wird. Eine Isolation kann in diesem Zusammenhang etwa dadurch erreicht werden, dass die aus der luftgekühlten Wärmeübertragereinheit ausströmende erwärmte Luft in einem Rohr-in-Rohr-System außen an einem Abgasrohr entlang geleitet wird.

Alternativ wird die aus der luftgekühlten Wärmeübertragereinheit auströmende Luft direkt in die Umgebung abgegeben oder in Strömungsrichtung des Abgases hinter einem Abgasnachbehandlungssystem in das Abgassystem eingeleitet. In dem letztgenannten Fall stellt die Einleitung der im Bereich der Abgasrückführung erwärmten Ansaugluft in den Abgasschalldämpfer eine bevorzugte Ausführungsform dar.

Mit der beschriebenen technischen Lösung wird mit Hilfe einer zusätzlichen Verdichtereinheit und einer Wärmeübertragereinheit in der Abgasrückführung eine Abkühlung des in der Abgasrückführung befindlichen Abgases erreicht, ohne dass bei der Dimensionierung der Verdichtereinheit auch die durch die Komponenten des Abgasnachbehandlungssystems, wie etwa Katalysatoren und/oder Partikelabscheider, hervorgerufenen Strömungsverluste berücksichtigt werden müssen. Die im verdichteten und erwärmten Ansaugluftstrom enthaltene Wärme wird somit genutzt und der Luftstrom schließlich unter strömungstechnischer Umgehung des Abgasnachbehandlungssystems an die Umgebung abgegeben.

Eine besonders geeignete Weiterbildung sieht vor, dass die Regelung der Verdichtereinheit unabhängig von der Regelung der übrigen Kühlkreisläufe gestaltet wird. Die Verdichtereinheit, mit der ein Kühlluftstrom durch die in der Abgasrückführung vorgesehene Wärmeübertragereinheit leitbar ist, wird insbesondere zusätzlich zu und separat von den übrigen Lüftern, die beispielsweise in Verbindung mit Wärmeübertragereinheiten, wie etwa einem Hauptkühlmittelkühler, der ggf. einen Hochtemperatur- und einen Niedertemperaturteil aufweist, einem Ladeluftkühler oder einem Kondensator einer Klimaanlage im Einsatz sind, betrieben.

Durch die Verdichtereinheit wird zumindest ein Teilluftstrom, der über eine Ansauganlage angesaugten Ansaugluft verdichtet und unter Umgehung des Verbrennungsraums der Wärmeübertragereinheit in der Abgasrückführung zugeleitet. Dem Abgas in der Abgasrückführung kann so mittels des beschriebenen luftgekühlten Wärmeübertragers Wärme entzogen werden, ohne dass diese einen der übrigen im Fahrzeug vorgesehenen Kühlkreisläufe belastet.

Die in der Abgasrückführung des Abgassystems vorgesehene Wärmeübertragereinheit wird abgasseitig von zumindest einem Teilstrom des den wenigstens einen Verbrennungsraums der Brennkraftmaschine verlassenden Abgasstrom durchströmt. Hierbei wird innerhalb der Wärmeübertragereinheit der Abgasstrom abgekühlt, während der Ansaugluftstrom die entsprechende Wärmemenge, abzüglich der wärmeübertragerspezifischen Verluste, aufnimmt. Der abgekühlte Abgasstrom bzw. Abgasteilstrom wird in geeigneter Weise über ein Flatterventil erneut der Verbrennungsluftzufuhr zugeleitet.

Selbstverständlich lässt sich die technische Lösung, bei der innerhalb der Abgasrückführung eine Wärmeübertragung zwischen dem den Verbrennungsraum verlassenden Abgas und der Ansaugluft stattfindet, mit bekannten System zur Aufladung einer Brennkraftmaschine sowie zur Nutzung der Abwärme des Abgases koppeln. So ist es einerseits beispielsweise denkbar, das beschriebene System mit einer zweistufigen Aufladung zu kombinieren, bei der sich in der Verbrennungsluftzufuhr sowohl nach der ersten als auch der zweiten Verdichterstufe jeweils eine Wärmeübertragereinheit zur Kühlung der Verbrennungs- bzw. Ladeluft befindet.

Zum anderen ist es auf bevorzugte Weise möglich, eine erste und eine zweite Wärmeübertragereinheit innerhalb der Abgasrückführung parallel oder in Reihe geschaltet vorzusehen, wobei in der ersten Wärmeübertrageeinheit, wie bereits beschrieben, eine Wärmeübertragung zwischen Abgas und verdichteter Ansaugluft und in der zweiten Wärmeübertrageeinheit zwischen Abgas und einem weiteren Wärmeträgermedium stattfindet. Das weitere Wärmeträgermedium dient in diesem Fall auf vorteilhafte Weise der Bereitstellung der entnommenen Wärme für weitere Komponenten, insbesondere für ein System zur Abwärmenutzung in einem Kraftfahrzeug. Beide innerhalb der Abgasrückführung vorgesehenen Wärmeübertragereinheiten werden entweder parallel oder in Reihe von jeweils einem Abgasteilstrom durchströmt.

In einer ganz speziellen Ausführungsform der Erfindung verfügt die Abgasrückführung des der Brennkraftmaschine nachgestalteten Abgassystems über zwei parallel geschaltete Wärmeübertragereinheiten, von denen die erste thermisch an die verdichtete Ansaugluft gekoppelte kleiner als die zweite Wärmeübertrageeinheit ausgeführt ist. Die zweite Wärmeübertragereinheit, deren Kälteleistung größer als die der ersten dimensioniert ist, wird vorzugsweise auf der dem Abgas abgewandten Seite von einem flüssigen oder zumindest teilweise dampfförmigem Wärmeträgermedium durchströmt. Mit Hilfe dieses Wärmeträgermediums wird die dem Abgas entzogene Wärme beispielsweise einem Abgasnachbehandlungssystem zur Verfügung stellt.

Kleiner bedeutet in diesem Zusammenhang, das vorzugsweise der Volumenstrom des die Abgasrückführung insgesamt durchströmenden Abgases ungleichmäßig auf die beiden Wärmeübertragungseinheiten in der Abgasrückführung verteilt wird, wobei der kleinere der beiden Volumenströme durch die thermisch an die Ansaugluft gekoppelte Wärmeübertrageeinheit geleitet wird. Vorteilhafterweise sind hierbei die beiden Wärmeübertragereinheiten derart ausgeführt, dass der die Abgasrückführung durchströmende Abgasstrom bzw. die Abgasteilströme auf eine Temperatur von etwa 170°C abgekühlt wird bzw. werden, bevor das abgekühlte Abgas erneut in die Verbrennungsluftzufuhr eingeleitet wird.

Vorzugsweise ist in der Abgasrückführung wenigstens eine weitere Wärmeübertragereinheit vorgesehen, die von dem verdichteten Ansaugluftstrom durchströmbar ist. Bevorzugt ist dabei vorgesehen, dass ein Teilstrom der der Umgebung entnommenen Ansaugluft einer separaten Wärmeübertragereinheit zugeführt wird, die hydraulisch in einen Motorkühlkreislauf eingebunden ist.

In einer weiteren besonderen Ausführungsform der Erfindung wird die verdichtete, in der luftgekühlten Wärmeübertragereinheit der Abgasrückführung erwärmte Luft einer weiteren Wärmeübertragereinheit zugeleitet. Eine spezielle Weiterbildung der Erfindung sieht in diesem Zusammenhang vor, dass es sich bei der weiteren Wärmeübertragereinheit um einen in das Motorkühlsystem integrierten Wärmeübertrager handelt. Auf diese Weise ist es möglich, das Motorkühlsystem auf vergleichsweise einfache Art zu entlasten. Bei einer derartigen technischen Lösung ist es somit denkbar, aus der Umgebung angesaugte und zumindest teilweise verdichtete Luft zu verwenden, um die in einem Kondensator des Motorkühlsystems anfallende Wärme abzuführen. Auch die Kombination eines derartigen luftgekühlten Wärmeübertragers mit einem wenigstens einen Nieder- und einen Hochtemperaturkreislauf aufweisenden Motorkühlsystem ist denkbar.

Die Wärme, die dem Abgasstrom innerhalb der Abgasrückführung durch eine von einem Teilluftstrom der Ansaugluft durchströmte Wärmeübertragereinheit entnommen und an die Ansaugluft übertragen wird, wird vorzugsweise derart in das Abgassystem eingeleitet, dass die Wärme in einem Abgasnachbehandlungssystem nutzbar ist. Mit der vorgesehenen Wärmeübertrageeinheit in der Abgasrückführung wird somit auf bevorzugte Weise zumindest ein Teil der Ansaugluft erwärmt und derart in das Abgassystem eingebracht, dass die Wärme an Anlagenkomponenten eines Abgasnachbehandlungssystems übertragen wird. Auf bevorzugte Weise findet eine Nutzung der Wärme in einem Abgasnachbehandlungssystem statt, indem Katalysatoren, Abscheider und/oder Filter aufgeheizt werden und insbesondere indem die dem Abgas mittels der Wärmeübertragung auf einen verdichteten Teilluftstrom entnommene Wärme für eine thermische Regeneration eines Partikelabscheiders genutzt wird. Bei einem Partikelabscheider kann es sich in einer bevorzugten Ausführungsform auch um einen Partikelfilter handeln.

Im Zusammenhang mit der Nutzung der dem Abgasstrom in der Abgasrückführung entnommenen Wärme zur thermischen Regeneration eines Partikelabscheiders und/oder eines Partikelfilters ist es besonders geeignet, die der Wärmeübertragereinheit auf der Ansaugluftseite vorgeschaltete Verdichtereinheit derart auszuführen, dass die durch diese Verdichtereinheit bewirkte Drucksteigerung der Ansaugluft einen Druckverlust aufgrund der thermischen Regeneration ausgleicht.

Durch das Vorsehen einer zusätzlichen Wärmeübertragereinheit in der Abgasrückführung, die nicht an das herkömmliche Kühlsystem gekoppelt ist, wird es somit auf bevorzugte Weise möglich, eine Erhöhung der Temperatur im Bereich der Abgasnachbehandlung zu erreichen, um etwa Intervalle, in denen eine Regeneration eines Partikelabscheiders nötig wird, zu vergrößern. Dies wiederum erhöht die Effektivität eines Abgasnachbehandlungssystems, da über die gesamte Laufzeit des Systems betrachtet, die Druckverluste verringert werden. Darüber hinaus stellt die beschriebene Wärmeübertragereinheit sicher, dass dem Abgas Wärme entnommen wird, die nicht über das Hauptkühlsystem, insbesondere ein Kühlsystem eines Kraftfahrzeugs, abgeführt werden muss. Dies stellt vor allem eine Entlastung hinsichtlich der Kühllasten der herkömmlich vorgesehenen Wasserkühler dar.

Genauso ist es denkbar, die in der Abgasrückführung erwärmte Luft zur Isolation einer Rohrleitung im Bereich eines Abgasnachbehandlungssystems zu nutzen. Die erwärmte Luft strömt hierbei in einem Außenrohr, das um das eigentliche Abgasrohr herum angeordnet ist. Alternativ kann die innerhalb der in der Abgasrückführung vorgesehenen Wärmeübertragereinheit erwärmte Luft direkt an die Umgebung abgegeben werden oder im Bereich des Abgasschalldämpfers in das Abgassystem eingeleitet werden.

Bei einer ganz speziellen Ausführungsform der Erfindung wird die der von Ansaugluft durchströmten Wärmeübertragereinheit vorgeschaltete Verdichtereinheit in die Ansauganlage für die Versorgung der Brennkraftmaschine mit Verbrennungsluft integriert. Vorzugsweise ist hierbei eine Regelarmatur vorgesehen, die den verdichteten Ansaugluftstrom in einen ersten und einen zweiten Ansaugteilluftstrom aufteilt. Von diesen verdichteten Teilströmen wird in Abhängigkeit des Betriebszustandes der eine Teilstrom der in der Abgasrückführung vorgesehenen Wärmeübertragereinheit zugeführt, während der zweite Ansaugluftteilstrom in die Verbrennungsluftzufuhr der Brennkraftmaschine eingeleitet wird.

In diesem Zusammenhang besteht die Funktion der Verdichtereinheit zum einen darin, dass diese während der Startphase als Beschleunigungshilfe für die Brennkraftmaschine dient, da im Ansaugtakt der Brennkraftmaschine zusätzliche Luft zur Verfügung steht und andererseits, dass durch diese zusätzlich bereitgestellte Luftmenge auch im Bremsfall eine höhere Bremsleistung der Motorbremse erzielt wird.

Neben einer Brennkraftmaschine mit einer entsprechenden Abgasrückführung des Abgassystems bezieht sich die Erfindung auch auf ein Verfahren zum Betrieb einer entsprechenden Brennkraftmaschine. Das erfindungsgemäße Verfahren, bei dem den Verbrennungsraum verlassendes Abgas in ein Abgassystem geleitet wird, zumindest ein Teilstrom des Abgases über eine Abgasrückführung in eine Verbrennungsluftzufuhr, die zur Versorgung des Verbrennungsraums mit Ansaugluft vorgesehen ist, rückgeführt wird und bei dem in der Abgasrückführung eine Wärmeübertrageeinheit vorgesehen ist, mittels der dem Abgas Wärmeenergie entzogen wird, zeichnet sich dadurch aus, dass der Ansaugluft ein Teilluftstrom entnommen sowie verdichtet wird und anschließend durch eine in der Abgasrückführung vorgesehene Wärmeübertrageeinheit geleitet wird. Im Anschluss an die Durchleitung durch die Wärmeübertragereinheit in der Abgasrückführung wird der verdichtete und nunmehr erwärmte Ansaugluftstrom in die Umgebung oder wahlweise vor oder hinter einem Abgasnachbehandlungssystem in das Abgassystem eingeleitet.

In einer speziellen Ausführungsform der Erfindung wird der verdichtete Ansaugluftstrom mittels eines Regelorgans in zwei Teilluftströme aufgeteilt, die wahlweise der luftgekühlten Wärmeübertragereinheit in der Abgasrückführung und/oder der Verbrennungsluftzufuhr der Brennkraftmaschine zugeleitet werden.

In einer speziellen Ausführungsform der Erfindung zeichnet sich das Verfahren dadurch aus, dass der verdichtete Teilluftstrom während einer Zeitspanne von 0 bis 5s, vorzugsweise von 1 bis 2 s, nach Betriebsstart der Brennkraftmaschine ausschließlich in die Verbrennungsluftzufuhr eingeleitet wird. Durch dieses kurzzeitige Einblasen zusätzlicher verdichteter Luft in die Verbrennungsluftzufuhr wird auf bevorzugte Weise eine Beschleunigungshilfe während der Startphase der Brennkraftmaschine bewirkt. Nach Abschluss dieser Startphase, also nach etwa fünf Sekunden, bevorzugt nach zwei Sekunden im Anschluss an den Betriebsstart wird die verdichtete Luft nicht mehr der Verbrennungsluftzufuhr, sondern vielmehr einer in der Abgasrückführung der Brennkraftmaschine vorgesehenen Wärmeübertrageeinheit zugeleitet, dort erwärmt und anschließend in das Abgassystem eingeleitet, um dort die dem Abgas entnommene Wärme nutzbar zu machen.

Eine weitere Ausgestaltung des erfindungsgemäßen Verfahrens sieht vor, dass der durch die in der Abgasrückführung vorgesehene Wärmeübertragereinheit geleitete, verdichtete und erwärmte Teilluftstrom wenigstens einer Anlagenkomponente eines Abgasnachbehandlungssystems zugeführt wird. Vorzugsweise wird die dem Abgasnachbehandlungssystem zur Verfügung gestellte Wärme zur thermischen Regeneration eines Partikelabscheiders und/oder eines Partikelfilters genutzt.
Das vorgeschriebene Verfahren eignet sich besonders, wenn zusätzlich an wenigstens einer weiteren Stelle der Abgasrückführung dem Abgas Wärme entzogen wird.

Die beschriebene Wärmeübertrageeinheit bzw. das beschriebene Verfahren, bei dem der Ansaugluft ein Teilluftstrom entnommen, dieser Teilluftstrom verdichtet und schließlich in einer Wärmeübertragereinheit in der Abgasrückführung mit Hilfe von Wärme, die dem Abgas entnommen wird, aufgeheizt wird, eignet sich insbesondere zur Kombination bzw. Integration in Systeme, die bereits eine Wärmeübertragereinheit in der Abgasrückführung aufweisen.

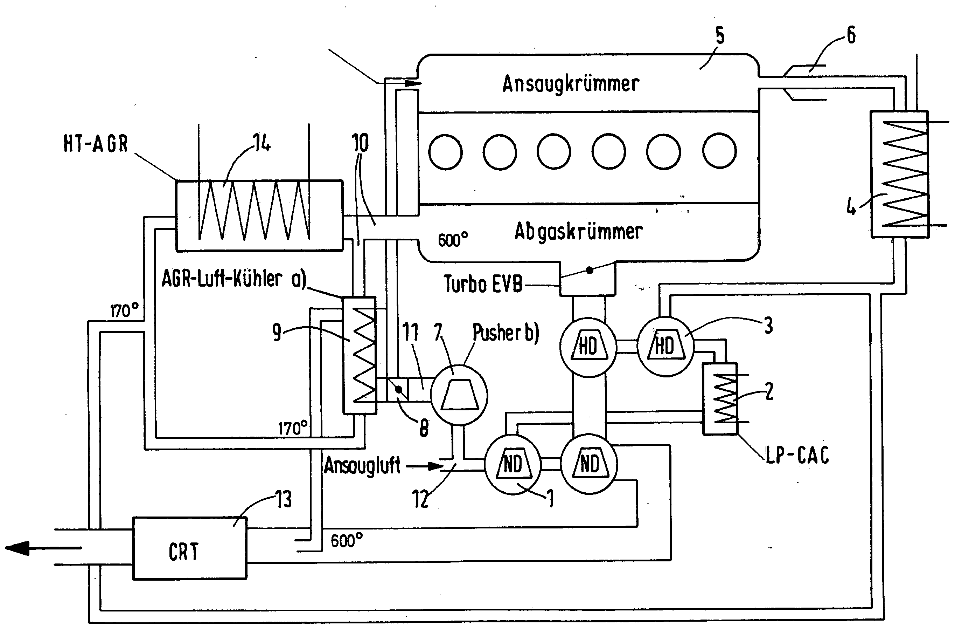

Im Folgenden wird die Erfindung anhand eines Ausführungsbeispiels unter Bezugnahme auf die Figur ohne Beschränkung des allgemeinen Erfindungsgedankens näher erläutert.

Die Figur zeigt ein thermodynamisches Schaltbild, auf dem die Verschaltung einer zweistufig aufgeladenen Brennkraftmaschine eines Nutzfahrzeugs mit integrierter Abgasrückführung und Abgasnachbehandlung schematisch dargestellt ist. Ein derartiges System ist in geeigneter Auslegung kann die gemäß "Euro 6" vorgeschriebenen Abgaswerte erfüllen.

Der Umgebung wird Ansaugluft zu Umgebungsbedingungen entnommen und einer Niederdruckverdichterstufte 1, einem Zwischenkühler 2 sowie einer Hochdruckverdichtereinheit 3 und einem Hauptladeluftkühler zugeführt, bevor sie in den Ansaugkrümmer 5 der Verbrennungsluftzufuhr einer Brennkraftmaschine eingeleitet wird. Durch das Vorsehen einer Venturidüse 6 wird die Strömungsgeschwindigkeit der angesaugten Luft stark erhöht, bevor diese in dem Bereich des Ansaugkrümmers 5 eintritt.

Wie der Schemadarstellung des Weiteren zu entnehmen ist, wird der Ansaugluft noch vor der Niederdruckverdichtereinheit 1 ein Teilluftstrom entnommen, der wiederum einer Verdichtereinheit 7 zugeführt wird. Der Verdichtereinheit 7 ist strömungstechnisch eine in Form einer Klappe ausgebildete Regelarmatur 8 nachgeschaltet, so dass an dieser Stelle der der Ansaugluft entnommene Teilluftstrom abermals aufgeteilt werden kann.

In einer ersten Betriebsphase, die mit einem Betriebsstart der Brennkraftmaschine zusammenfällt und ein bis zwei Sekunden andauert, wird der Ansaugluft ein Teilluftstrom entnommen, mit Hilfe der Verdichtereinheit 7 verdichtet und die Regelarmatur 8 derart geschaltet, dass dieser verdichtete Teilluftstrom zusätzlich zu der übrigen Ansaugluft in den Ansaugkrümmer 5 gelangt. Auf diese Weise wird dem Verbrennungsraum der Brennkraftmaschine zusätzlich verdichtete Luft zur Verfügung gestellt. Auf diese Weise wird in der Startphase der Brennkraftmaschine eine zusätzliche Beschleunigungshilfe realisiert.

Sobald die Startphase der Brennkraftmaschine abgeschlossen ist, wird die Regelarmatur 8 umgeschaltet, so dass der der Ansaugluft entnommene Teilluftstrom mit Hilfe der Verdichtereinheit 7 verdichtet und schließlich in eine erste innerhalb der Abgasrückführung der Brennkraftmaschine angeordnete Wärmeübertrageeinheit 9 eingeleitet wird. In der ersten Wärmeübertrageeinheit 9 findet eine Wärmeübertragung zwischen einem die Brennkraftmaschine verlassenden Abgasstrom bzw. Abgasteilstrom 10 und dem verdichteten Teilluftstrom 11 der Ansaugluft 12 statt. Hierbei wird das Abgas abgekühlt und der Teilluftstrom 11 erwärmt. Der erwärmte Teilluftstrom 11 wird anschließend einem Abgasnachbehandlungssystem 13 zugeleitet. Durch die Einleitung eines derart aufgeheizten Luftstroms in die Abgasnachbehandlung 13 findet an dieser Stelle eine Erwärmung der entsprechenden Abgasnachbehandlungskomponenten statt. Durch diese zusätzliche Erwärmung kann das Temperaturniveau, insbesondere in einem Partikelabscheider innerhalb des Abgasnachbehandlungssystems 13 auf einem vergleichsweise hohen Niveau gehalten werden. Diese Erhöhung des Temperaturniveaus wiederum bewirkt, dass die für die thermische Regenerierung erforderlichen Intervalle gegenüber herkömmlichen Systemen verlängert werden können.

Das in der Figur dargestellte System zeichnet sich dadurch aus, dass der Abgasteilstrom 10 der dem Abgas entnommen wird, in der Abgasrückführung mit Hilfe von zwei Wärmeübertragereinheiten von einer Temperatur von etwa 600°C auf eine Temperatur von 170°C abgekühlt wird. Hierbei sind die beiden in der Abgasrückführung vorgesehenen Wärmeübertrageeinheiten 9, 14 strömungstechnisch parallel geschaltet. Die mit Hilfe des ersten Wärmeübertragers 9 dem Abgasteilstrom 10 entnommene Wärme wird, wie zuvor beschrieben an einen verdichteten Teilluftstrom 11 der Ansaugluft übertragen. In der zweiten Wärmeübertragereinheit 14 wird dagegen das Abgas abgekühlt und ein weiteres Wärmeträgermedium, bei dem es sich vorzugsweise um ein Wasser-Glykol-Gemisch handelt, aufgewärmt. Die abgekühlten Abgasströme, die die beiden Wärmeübertragereinheiten 9, 14 der Abgasrückführung verlassen, werden zusammen geführt und zwischen der Hochdruckverdichtereinheit 3 und dem Ladelufthauptkühler 4 erneut der Verbrennungsluftzufuhr zugeführt.

Das Vorsehen einer Wärmeübertragereinheit 9 innerhalb der Abgasrückführung, die nicht an eines der übrigen im Fahrzeug vorgesehenen Kühlsysteme gekoppelt ist, ermöglicht einerseits die Abfuhr und Nutzung von Wärme aus dem Abgas, ohne die üblichen Kühlsysteme zu belasten und stellt andererseits durch die Kombination mit einer zusätzlichen Verdichtereinheit 7 (Pusher) eine zusätzliche Beschleunigungshilfe für den Startvorgang der Brennkraftmaschine zur Verfügung.

### Bezugszeichenliste

- 1: Niederdruckverdichter
- 2: Zwischenkühler
- 3: Hochdruckverdichter
- 4: Ladelufthauptkühler
- 5: Ansaugkrümmer der Verbrennungsluftzufuhr
- 6: Düse
- 7: Verdichtereinheit
- 8: Regelarmatur
- 9: ansaugluftdurchströmte Wärmeübertragereinheit
- 10: Abgas
- 11: verdichteter Teilluftstrom der Ansaugluft
- 12: Ansaugluft
- 13: Abgasnachbehandlungssystem
- 14: zweite Wärmeübertragereinheit

## Patentansprüche

1. Brennkraftmaschine mit einem Verbrennungsraum und einem Abgassystem, in das den Verbrennungsraum verlassendes Abgas (10) einleitbar ist und das über eine Abgasrückführung verfügt, mittels der das Abgas (10) zumindest teilweise in eine Verbrennungsluftzufuhr (5) zur Versorgung des Verbrennungsraums mit Verbrennungsluft (12) rückführbar ist, wobei in der Abgasrückführung eine Wärmeübertragereinheit (9) vorgesehen ist, mit der dem Abgas (10) Wärmeenergie entziehbar ist, wobei eine Verdichtereinheit (7) vorgesehen ist, mit der der Umgebung entnommene Ansaugluft verdichtet und der verdichtete Ansaugluftstrom (11) unter Umgehung des Verbrennungsraums zunächst durch die in der Abgasrückführung vorgesehene Wärmeübertragereinheit (9) leitbar ist,
**dadurch gekennzeichnet,**
**dass** die verdichtete, in der luftgekühlten Wärmeübertragereinheit (9) der Abgasrückführung erwärmte Luft (9) einer weiteren Wärmeübertragereinheit zugeleitet wird, wobei es sich bei der weiteren Wärmeübertragereinheit um einen in das Motorkühlsystem integrierten Wärmeübertrager handelt.

2. Brennkraftmaschine nach Anspruch 1,
**dadurch gekennzeichnet, dass** der verdichtete Ansaugluftstrom nach der Durchleitung durch die Wärmeübertragereinheit (9) durch einen Abgaswärmeübertrager, der in thermischem Kontakt mit einem außerhalb der Abgasrückführung befindlichen Bereich des Abgassystems steht, leitbar ist.

3. Brennkraftmaschine nach Anspruch 1 oder 2,
**dadurch gekennzeichnet, dass** ein Stellorgan (8) vorgesehen ist, mittels dem ein der Umgebung entnommener Luftstrom in den Verbrennungsluftstrom und den Ansaugluftstrom aufteilbar ist.

4. Brennkraftmaschine nach einem der Ansprüche 1 bis 3,
**dadurch gekennzeichnet, dass** die Verdichtereinheit (7) über ein Starterritzel eines Anlassers der Brennkraftmaschine angetrieben wird.

5. Brennkraftmaschine nach einem der Ansprüche 1 bis 4,
**dadurch gekennzeichnet, dass** die Verdichtereinheit (7) über einen Zahnrad- und/oder einen Riemenantrieb angetrieben wird.

6. Brennkraftmaschine nach einem der Ansprüche 1 bis 5,
**dadurch gekennzeichnet, dass** in der Abgasrückführung des Abgassystems eine erste und eine zweite Wärmeübertragereinheit (9, 14) vorgesehen sind, die strömungstechnisch in Reihe geschaltet sind und von denen nur eine der beiden mit einem verdichteten Teilluftstrom (11) versorgbar ist.

7. Brennkraftmaschine nach einem der Ansprüche 1 bis 5,
**dadurch gekennzeichnet, dass** die erste Wärmeübertragereinheit (9) als Rohr-in-Rohr-Wärmeübertrager ausgeführt ist.

8. Brennkraftmaschine nach Anspruch 7,
**dadurch gekennzeichnet, dass** der Rohr-in-Rohr-Wärmeübertrager derart angeordnet ist, dass der aus der in der Abgasrückführung vorgesehenen Wärmeübertragereinheit (9) kommende verdichtete Ansaugluftstrom (11) durch ein Außenrohr des Rohr-in-Rohr-Wärmeübertragers leitbar ist.

9. Brennkraftmaschine nach einem der Ansprüche 1 bis 8,
**dadurch gekennzeichnet, dass** die verdichtete Ansaugluft nach Verlassen der ersten bzw. zweiten Wärmeübertragereinheit (9) in das Abgassystem leitbar ist.

10. Brennkraftmaschine nach einem der Ansprüche 1 bis 8,
**dadurch gekennzeichnet, dass** die verdichtete Ansaugluft nach Verlassen der Wärmeübertragereinheit (9) in die Umgebung leitbar ist.

11. Brennkraftmaschine nach einem der Ansprüche 1 bis 9,
**dadurch gekennzeichnet, dass** die verdichtete Ansaugluft nach Verlassen der Wärmeübertragereinheit (9) in Strömungsrichtung vor einer Abgasnachbehandlungseinheit in das Abgassystem leitbar ist.

12. Brennkraftmaschine nach einem der Ansprüche 1 bis 9,
**dadurch gekennzeichnet, dass** die verdichtete Ansaugluft nach Verlassen der Wärmeübertragereinheit (9) im Bereich eines Abgasschalldämpfers in das Abgassystem leitbar ist.

13. Verfahren zum Betrieb einer Brennkraftmaschine, die über wenigstens einen Verbrennungsraum verfügt, bei dem den Verbrennungsraum verlassendes Abgas (10) in ein Abgassystem geleitet wird, zumindest ein Teilstrom des Abgases über eine Abgasrückführung in eine Verbrennungsluftzufuhr (5), die zur Versorgung des Verbrennungsraums mit Ansaugluft (12) vorgesehen ist, rückgeführt wird, und bei dem in der Abgasrückführung eine Wärmeübertragereinheit (9) vorgesehen ist, mittels der dem Abgas Wärmeenergie entzogen wird,
**dadurch gekennzeichnet,**
**dass** der Ansaugluft (12) zumindest ein Teilluftstrom entnommen sowie verdichtet wird und der verdichtete Ansaugluftstrom (11) unter Umgehung des Verbrennungsraums zunächst durch die in der Abgasrückführung vorgesehene Wärmeübertragereinheit (9) und anschließend durch eine Einheit, die thermisch an einen außerhalb der Abgasrückführung befindlichen Bereich des Abgassystems gekoppelt ist, geleitet wird, und
**dass** die verdichtete, in der luftgekühlten Wärmeübertragereinheit (9) der Abgasrückführung erwärmte Luft (9) einer weiteren Wärmeübertragereinheit zugeleitet wird, wobei es sich bei der weiteren Wärmeübertragereinheit um einen in das Motorkühlsystem integrierten Wärmeübertrager handelt.

14. Verfahren nach Anspruch 13,
**dadurch gekennzeichnet, dass** Wärme aus dem durch die in der Abgasrückführung vorgesehene Wärmeübertragereinheit (9) geleiteten verdichteten und erwärmten Ansaugluftstrom (11) an zumindest eine Komponente eines Abgasnachbehandlungssystems (13) übertragen wird.

## Claims

1. An internal combustion engine having a combustion chamber and having an exhaust system into which the exhaust gas (10) exiting the combustion chamber can be introduced and which has an exhaust-gas recirculation arrangement, by means of which exhaust-gas recirculation arrangement the exhaust gas (10) can be at least partially recirculated into a combustion air feed line (5) for the supply of combustion air (12) to the combustion chamber, wherein, in the exhaust-gas recirculation arrangement, there is provided a heat exchanger unit (9) by means of which heat energy can be extracted from the exhaust gas (10), wherein a compressor unit (7) is provided, by means of which intake air taken from the surroundings is compressed and the compressed intake air stream (11) can be conducted, bypassing the combustion chamber, initially through the heat exchanger unit (9) provided in the exhaust-gas recirculation arrangement,
**characterized**
**in that** the compressed air (9) heated in the air-cooled heat exchanger unit (9) of the exhaust-gas recirculation arrangement is conducted to a further heat exchanger unit, wherein the further heat exchanger unit is a heat exchanger integrated into the engine cooling system.

2. The internal combustion engine according to Claim 1,
**characterized in that** the compressed intake air stream can, after being conducted through the heat exchanger unit (9), be conducted through an exhaust-gas heat exchanger which is in thermal contact with a region of the exhaust system situated outside the exhaust-gas recirculation arrangement.

3. The internal combustion engine according to Claim 1 or 2,
**characterized in that** a control element (8) is provided by means of which an air stream taken from the surroundings can be divided into the combustion air stream and the intake air stream.

4. The internal combustion engine according to one of Claims 1 to 3, **characterized in that** the compressor unit (7) is driven by way of a starter pinion of a starter of the internal combustion engine.

5. The internal combustion engine according to one of Claims 1 to 4,
**characterized in that** the compressor unit (7) is driven by way of a gearwheel drive and/or a belt drive.

6. The internal combustion engine according to one of Claims 1 to 5,
**characterized in that**, in the exhaust-gas recirculation arrangement of the exhaust system, there are provided a first and a second heat exchanger unit (9, 14) which are connected in series in terms of flow and of which only one of the two can be supplied with a compressed partial air stream (11).

7. The internal combustion engine according to one of Claims 1 to 5,
**characterized in that** the first heat exchanger unit (9) is in the form of a tube-in-tube heat exchanger.

8. The internal combustion engine according to Claim 7,
**characterized in that** the tube-in-tube heat exchanger is arranged such that the compressed intake air stream (11) passing out of the heat exchanger unit (9) provided in the exhaust-gas recirculation arrangement can be conducted through an outer tube of the tube-in-tube heat exchanger.

9. The internal combustion engine as claimed in one of Claims 1 to 8,
**characterized in that** the compressed intake air can, after exiting the first or second heat exchanger unit (9), be conducted into the exhaust system.

10. The internal combustion engine according to one of Claims 1 to 8,
**characterized in that** the compressed intake air can, after exiting the heat exchanger unit (9), be conducted into the surroundings.

11. The internal combustion engine according to one of Claims 1 to 9,
**characterized in that** the compressed intake air can, after exiting the heat exchanger unit (9), be conducted into the exhaust system upstream of an exhaust-gas aftertreatment unit as viewed in a flow direction.

12. The internal combustion engine according to one of Claims 1 to 9,
**characterized in that** the compressed intake air can, after exiting the heat exchanger unit (9), be conducted into the exhaust system in the region of an exhaust silencer.

13. A method for operating an internal combustion engine which has at least one combustion chamber, in which method exhaust gas (10) exiting the combustion chamber is conducted into an exhaust system, at least a partial stream of the exhaust gas is recirculated via an exhaust-gas recirculation arrangement into a combustion air feed line (5) which is provided for supplying intake air (12) to the combustion chamber, and in which method a heat exchanger unit (9) is provided in the exhaust-gas recirculation arrangement, by means of which heat exchanger unit heat energy is extracted from the exhaust gas,
**characterized in that**
at least a partial air stream is extracted from the intake air (12) and compressed, and the compressed intake air stream (11) is conducted, bypassing the combustion chamber, initially through the heat exchanger unit (9) provided in the exhaust-gas recirculation arrangement and subsequently through a unit which is thermally coupled to a region of the exhaust system situated outside the exhaust-gas recirculation arrangement,
and
**in that** the compressed air (9) heated in the air-cooled heat exchanger unit (9) of the exhaust-gas recirculation arrangement is conducted to a further heat exchanger unit, wherein the further heat exchanger unit is a heat exchanger integrated into the engine cooling system.

14. The method according to Claim 13,
**characterized in that** heat from the compressed and heated intake air stream (11) that is conducted through the heat exchanger unit (9) provided in the exhaust-gas recirculation arrangement is transmitted to at least one component of an exhaust-gas aftertreatment system (13).

## Revendications

1. Moteur à combustion interne avec une chambre de combustion et un système de gaz d'échappement, dans lequel les gaz d'échappement (10) quittant la chambre de combustion peuvent être introduits et qui est doté d'un recyclage des gaz d'échappement, au moyen duquel les gaz d'échappement (10) peuvent être recyclés au moins partiellement dans une admission d'air de combustion (5) pour l'alimentation de la chambre de combustion avec de l'air de combustion (12), dans lequel il est prévu dans le recyclage des gaz d'échappement une unité de transfert de chaleur (9), avec laquelle de l'énergie thermique peut être extraite des gaz d'échappement (10), dans lequel il est prévu une unité de compresseur (7), avec laquelle de l'air d'admission aspiré de l'air ambiant est comprimé et le courant d'air d'admission comprimé (11) peut être conduit d'abord, en contournant la chambre de combustion, à travers l'unité de transfert de chaleur (9) prévue dans le recyclage des gaz d'échappement, **caractérisé**
**en ce que**
l'air (9) comprimé, chauffé dans l'unité de transfert de chaleur (9) refroidie par air du recyclage des gaz d'échappement, est acheminé à une unité de transfert de chaleur supplémentaire, l'unité de transfert de chaleur supplémentaire étant un échangeur de chaleur intégré dans le système de refroidissement du moteur.

2. Moteur à combustion interne selon la revendication 1, **caractérisé en ce que** le courant d'air d'admission comprimé peut être conduit, après son passage à travers l'unité de transfert de chaleur (9), à travers un échangeur de chaleur des gaz d'échappement, qui est en contact thermique avec une région du système de gaz d'échappement qui se trouve à l'extérieur du recyclage des gaz d'échappement.

3. Moteur à combustion interne selon la revendication 1 ou 2, **caractérisé en ce qu'**il est prévu un organe de réglage (8), au moyen duquel un courant d'air prélevé dans l'air ambiant peut être divisé en un courant d'air de combustion et un courant d'air d'admission.

4. Moteur à combustion interne selon l'une quelconque des revendications 1 à 3, **caractérisé en ce que** l'unité de compresseur (7) est entraînée par un pignon de démarrage d'un démarreur du moteur à combustion interne.

5. Moteur à combustion interne selon l'une quelconque des revendications 1 à 4, **caractérisé en ce que** l'unité de compresseur (7) est entraînée par un entraînement par roues dentées et/ou par courroie.

6. Moteur à combustion interne selon l'une quelconque des revendications 1 à 5, **caractérisé en ce qu'**il est prévu, dans le recyclage des gaz d'échappement du système de gaz d'échappement, une première et une deuxième unité de transfert de chaleur (9, 14), qui sont montées en série en termes de technique d'écoulement et parmi lesquelles seule une des deux peut être alimentée avec un courant d'air partiel comprimé (11).

7. Moteur à combustion interne selon l'une quelconque des revendications 1 à 5, **caractérisé en ce que** la première unité de transfert de chaleur (9) est réalisée sous la forme d'un échangeur de chaleur à tubes coaxiaux.

8. Moteur à combustion interne selon la revendication 7, **caractérisé en ce que** l'échangeur de chaleur à tubes coaxiaux est agencé de telle manière que le courant d'air d'admission comprimé (11) sortant de l'unité de transfert de chaleur (9) prévue dans le recyclage des gaz d'échappement puisse être conduit à travers un tube extérieur de l'échangeur de chaleur à tubes coaxiaux.

9. Moteur à combustion interne selon l'une quelconque des revendications 1 à 8, **caractérisé en ce que** l'air d'admission comprimé peut être conduit dans le système de gaz d'échappement après avoir quitté la première ou la deuxième unité de transfert de chaleur (9).

10. Moteur à combustion interne selon l'une quelconque des revendications 1 à 8, **caractérisé en ce que** l'air d'admission comprimé peut être conduit dans l'air ambiant après avoir quitté l'unité de transfert de chaleur (9).

11. Moteur à combustion interne selon l'une quelconque des revendications 1 à 9, **caractérisé en ce que** l'air d'admission comprimé peut, après avoir quitté l'unité de transfert de chaleur (9), être conduit dans le système de gaz d'échappement avant une unité de traitement des gaz d'échappement dans la direction d'écoulement.

12. Moteur à combustion interne selon l'une quelconque des revendications 1 à 9, **caractérisé en ce que** l'air d'admission comprimé peut, après avoir quitté l'unité de transfert de chaleur (9), être conduit dans le système de gaz d'échappement dans la région d'un pot d'échappement.

13. Procédé de conduite d'un moteur à combustion interne, qui comporte au moins une chambre de combustion, dans lequel on conduit des gaz d'échappement (10) quittant la chambre de combustion dans un système de gaz d'échappement, on recycle au moins un courant partiel des gaz d'échappement par un recyclage des gaz d'échappement dans une admission d'air de combustion (5), qui est prévue pour l'alimentation de la chambre de combustion en air d'admission (12), et dans lequel il est prévu, dans le recyclage des gaz d'échappement, une unité de transfert de chaleur (9), au moyen de laquelle on extrait de l'énergie thermique à partir des gaz d'échappement, **caractérisé**
**en ce que** l'on prélève au moins un courant d'air partiel à partir de l'air d'admission (12) et on le comprime et on conduit le courant d'air d'admission comprimé (11), en contournant la chambre de combustion, d'abord à travers l'unité de transfert de chaleur (9) prévue dans le recyclage des gaz d'échappement et ensuite à travers une unité, qui est thermiquement couplée à une région du système de gaz d'échappement se trouvant à l'extérieur du recyclage des gaz d'échappement,
et
**en ce que** l'air (9) comprimé, chauffé dans l'unité de transfert de chaleur (9) refroidie par air du recyclage des gaz d'échappement, est acheminé à une unité de transfert de chaleur supplémentaire, l'unité de transfert de chaleur supplémentaire étant un échangeur de chaleur intégré dans le système de refroidissement du moteur.

14. Procédé selon la revendication 13, **caractérisé en ce que** l'on transfère de la chaleur à partir du courant d'air d'admission (11) comprimé et chauffé conduit à travers l'unité de transfert de chaleur (9) prévue dans le recyclage des gaz d'échappement à au moins un composant d'un système de post-traitement des gaz d'échappement (13).
